Europäisches Patentamt

European Patent Office

Office européen des brevets

(19)

(11) **EP 0 519 773 B1**

(12) **FASCICULE DE BREVET EUROPEEN**

(45) Date de publication et mention
de la délivrance du brevet:
**12.03.1997 Bulletin 1997/11**

(51) Int Cl.⁶: **G01S 3/786**, G01S 17/88

(21) Numéro de dépôt: **92401384.0**

(22) Date de dépôt: **21.05.1992**

(54) **Procédé et dispositif de recalage continu d'images en veille panoramique**

Verfahren und Vorrichtung zur kontinuierlichen Wiederpositionierung von
Panorama-Überwachungsbildern

Method and device for continuous readjustement of panoramic surveillance images

(84) Etats contractants désignés:
**DE GB IT**

(30) Priorité: **21.06.1991 FR 9107672**

(43) Date de publication de la demande:
**23.12.1992 Bulletin 1992/52**

(73) Titulaire: **THOMSON-CSF**
**75008 Paris (FR)**

(72) Inventeurs:
• **Ayoun, André**
**F-92045 Paris la Défense (FR)**
• **Dufour, Jean-Yves**
**F-92045 Paris la Défense (FR)**
• **Fety, Luc**
**F-92045 Paris la Défense (FR)**

(74) Mandataire: **Benoit, Monique et al**
**THOMSON-CSF-S.C.P.I.,**
**13, Avenue du Président**
**Salvador Allende**
**94117 Arcueil Cédex (FR)**

(56) Documents cités:
EP-A- 0 241 983       EP-A- 0 390 640
WO-A-79/00260       FR-A- 2 656 106
US-A- 4 688 091

• **IEEE TRANSACTIONS ON AUTOMATIC**
**CONTROL. vol. AC-25, no. 2, Avril 1980, NEW**
**YORK US pages 222 - 225; P.S. MAYBECK ET**
**AL.: 'A Target Tracker using spatially distributed**
**Measurements'**

## Description

La présente invention concerne un procédé et un dispositif de recalage continu d'image en veille panoramique. Elle s'applique notamment aux systèmes d'imagerie panoramique pour la surveillance. L'image peut appartenir au domaine des longueurs d'onde visible ou infrarouge. Plus généralement, l'invention concerne les domaines du traitement d'images, de l'optronique et du traitement du signal. Elle peut par exemple s'appliquer au recalage des données obtenues par un radar de veille panoramique.

Les systèmes d'imagerie panoramique permettent une surveillance selon un angle de 360°. Ils sont constitués d'une tête optique tournante et d'un détecteur linéaire. A chaque instant, le détecteur linéaire forme une colonne de l'image panoramique. L'image panoramique est obtenue par la juxtaposition des colonnes d'images formées par ce capteur linéaire en rotation autour d'un axe vertical. Le nombre de colonnes par tour peut atteindre plusieurs dizaines de milliers. Le recalage d'images consiste à mettre en correspondance les images successives obtenues durant les tours successifs du capteur. Le recalage d'images est par exemple nécessaire dans le cas de détection de mouvement ou de poursuite d'objets en déplacement. En effet, pour détecter les mouvements révélateurs de cibles ou de menaces potentielles, il faut procéder par analyse de la différence entre l'image courante et l'image formée au tour précédent. Or ce problème est compliqué par les propres mouvements ou oscillations du dispositif de veille, à savoir la tête optique tournante et le détecteur linéaire, inhérents à certaines applications. C'est le cas notamment quand ce dispositif est installé sur un porteur mobile ou au sommet d'un mât par exemple.

Le problème à résoudre consiste donc à mettre au point un procédé permettant d'estimer de façon précise les déformations des images obtenues par le dispositif de veille tournant afin de rendre possible la détection d'objets en mouvement par différence entre l'image présente et l'image précédente corrigée de sa déformation. Des solutions connues utilisent des techniques de recalage global, comme celle décrite par l'article "Recursive motion estimation based on a model of the camera dynamics" paru dans la revue Signal Processing V : Theoric and Applications (L. Torres, E. Margau et M.A. Lagunnas éditeur). D'autres solutions sont applicables lorsque chaque image est obtenue de façon quasi instantanée, sur imagerie de type télévision par exemple, et que la déformation peut être réduite à une transformation paramétrique globale telle qu'une translation-rotation en deux dimensions ou en trois dimensions en utilisant des modèles de profondeur de la scène. Des techniques non paramétriques fondées sur la recherche de transformations élastiques utilisant une hypothèse de continuité de la déformation sont parfois applicables. Néanmoins, des défauts apparaissent avec ces solutions, en particulier une imprécision de la mise en correspondance des images et une lourdeur des calculs.

Une demande de brevet européen EP 390 640 présente un procédé de recalage automatique d'image à partir d'une sélection de points.

Un article "IEEE Transactions on automatics Control" volume AC-25 n° 2 Avril 1980 pages 222 à 225, présente l'utilisation de filtres de Kalman relative à la modélisation de vibrations globales d'une image.

Le but de l'invention est de pallier les inconvénients précités.

A cet effet, l'invention a pour objet un procédé de recalage continu d'images en veille panoramique tel que décrit par la revendication 1.

L'invention a également pour objet un dispositif pour la mise en oeuvre du procédé précité.

L'invention a pour principaux avantages qu'elle permet un recalage d'images compatible avec les applications de surveillances, notamment la détection et la caractérisation des mouvements d'objets en veille panoramique tout en réduisant la complexité des calculs de résolution.

D'autres caractéristiques et avantages de l'invention apparaîtront à l'aide de la description qui suit faite en regard des dessins annexés qui représentent :

- La figure 1, un organigramme pour illustrer les étapes du procédé mis en oeuvre par l'invention.
- Les figures 2a et 2b, des représentations des différents repères utilisés.
- La figure 3, des images générées en deux tours successifs et représentées en superposition.
- La figure 4, un mode de réalisation possible d'un dispositif pour la mise en oeuvre de l'invention.

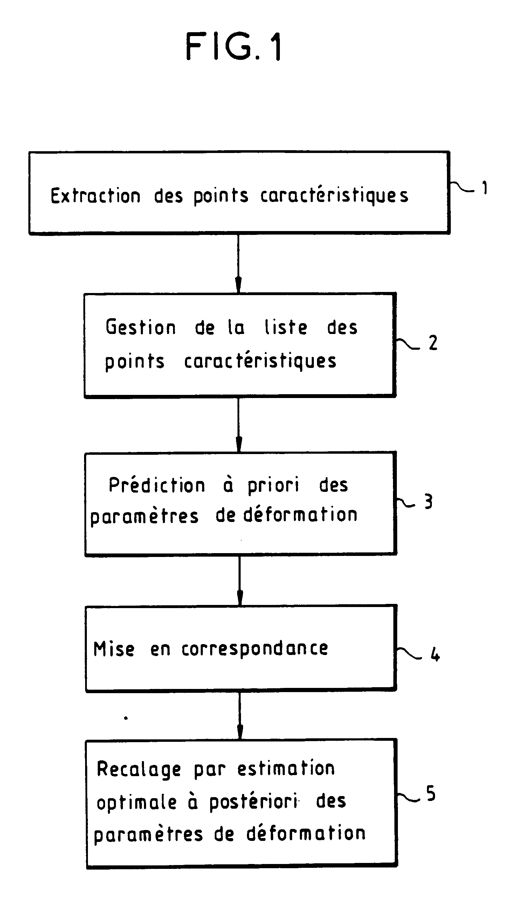

Comme le montre l'organigramme de la figure 1, le procédé selon l'invention comporte cinq étapes. Ce procédé utilise la structure particulière des images panoramiques qui est continue et fermée, c'est-à-dire qu'il n'y a ni bord droit, ni bord gauche. Il utilise par ailleurs la connaissance a priori que l'on peut avoir sur les mouvements du dispositif de veille, connaissance de nature statistique aisément représentable par un modèle Gaussien-Markovien. Le procédé consiste suivant une étape 1 à extraire les points caractéristiques de l'image panoramique, suivant une étape 2 à gérer la liste des points caractéristiques, suivant une étape 3 à prédire les paramètres instantanés de la déformation a priori selon la technique du filtre de Kalman, suivant une étape 4 à mettre en correspondance les points caractéristiques qui viennent d'être extraits de l'image actuelle avec la liste des points caractéristiques prédits à partir de ceux de l'image précédente et des paramètres de déformation estimés a priori lors de l'étape 3, enfin suivant une étape 5 à estimer les paramètres instantanés de la déformation à partir des mesures des écarts entre les points caractéristiques prédits et ceux obtenus dans l'image courante, au moyen d'un filtre de Kalman. Cette dernière étape constitue le recalage d'images. La technique de filtrage de Kalman utilisée dans le procédé est bien connue de l'homme de l'art, elle est décrite en particulier dans l'ouvrage de MM. Labarrere, J.P. Krief et B. Gimonet "Le filtrage et ses applications" aux éditions Cepadues, Toulouse.

L'étape 4 de mise en correspondance peut être décomposée en une étape de sélection des points caractéristiques parmi la liste établie suivi de l'étape de mise en correspondance. Par ailleurs, pour effectuer la détection d'objets mobiles, il est nécessaire d'ajouter une sixième étape de compensation de la déformation de l'image de référence pour qu'elle devienne superposable à l'image présente. Cette compensation est effectuée par la mise en oeuvre de la transformation paramétrique estimée à l'étape précédente 5. Les techniques d'extraction des points caractéristiques utilisées dans l'étape 1 ne sont pas développées parce qu'elles relèvent de méthodes connues. Il est possible par exemple d'extraire de l'image courante des points caractéristiques d'un tour à l'autre à l'aide du détecteur de Moravec, exposé dans l'article de H.P. Moravec "Towards automatic visual obstacle avoidance", in Proceeding of the International Joint Conference on Artificial Intelligence (IJCAI), 1977. Dans l'étape 2, de gestion de la liste des points caractéristiques, les points extraits au tour présent sont mémorisés pour être utilisés lors de la mise en correspondance du tour suivant. Cette étape ne constituant pas une caractéristique de l'invention ne sera plus amplement décrite.

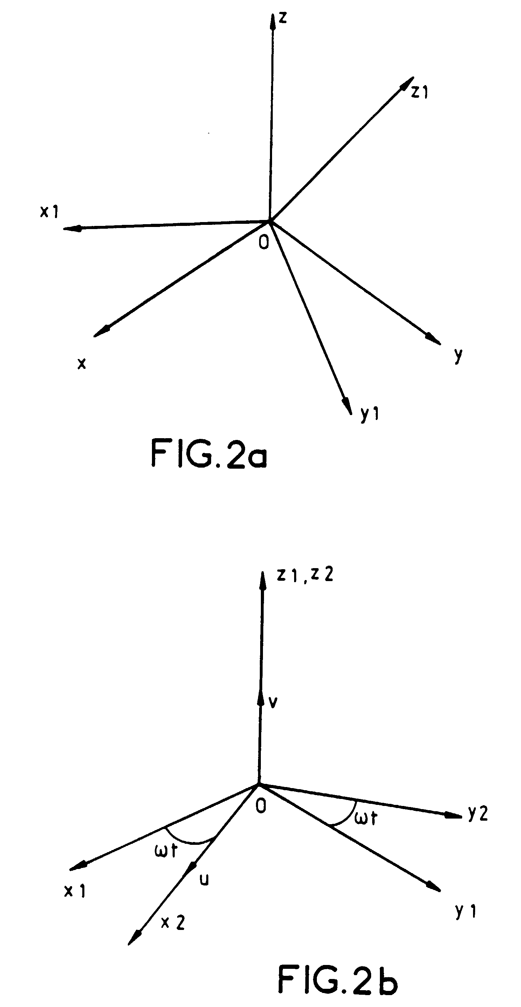

Les paramètres de déformation estimés par le filtre de Kalman peuvent être par exemple les trois angles qui définissent à chaque instant l'orientation du dispositif tournant de veille panoramique. Dans ce cas, l'étape 3 consistera donc à prédire les angles de visée de ce dispositif de veille. Ces trois angles sont notés $\emptyset$, $\theta$ et $\psi$. Ils sont indiqués sur les figures 2a et 2b qui montrent la représentation des différents repères utilisés et décrits ci-après.

Soit figure 2a $R = (O, x, y, z)$ un repère orthonormé, fixe de référence et

$R_1 = (O, x_1, y_1, z_1)$ un repère orthonormé lié à la plate-forme supportant le dispositif de veille. Cette plate-forme peut être un porteur mobile ou le sommet d'un mât par exemple.

Soit figure 2b $R_2 = (O, x_2, y_2, z_2)$ un repère orthonormé lié au dispositif de veille et tournant avec ce dispositif autour de l'axe $Oz_1$ du repère $R_1$ à la vitesse angulaire $\omega$, dans ce repère $R_2$, l'axe $0x_2$ matérialise l'axe optique du dispositif et $(O, u, v)$ le repère $R_{u,v}$ définissant l'espace de dimension deux lié à l'image panoramique. Dans ce dernier repère, l'axe "horizontal" u indique la position de chaque colonne de l'image panoramique, proportionnel à $\omega t$, où t représente le temps. Un point de l'espace défini dans le repère $R_2$ est vu à l'instant t tel que $y_2 = 0$ avec une ordonnée v telle que $v/f = z_2/x_2$, f étant la distance focale de la ligne de visée de la tête optique tournante. Pour des commodités de calculs, f sera pris égale à 1.

Soit ROT1 la matrice de passage du repère R au repère $R_1$ et ROT2 la matrice de passage du repère $R_1$ au repère $R_2$.

Soit $X = {}^t(x, y, z)$ la matrice des coordonnées d'un point dans le repère R où ${}^tX$ désigne la transposée de la matrice X

Soit $X_2 = {}^t(x_2, y_2, z_2)$ la matrice des coordonnées d'un point dans le repère $R_2$.

D'après les définitions précédentes, il vient :

$X_2 = ROT2 * ROT1 * X$, produit matriciel de ROT1, ROT2 et de la matrice transposée de X.

ROT1 est définie à partir des angles $\emptyset$, $\theta$ et $\psi$ comme suit :

$$ROT1 = \begin{pmatrix} 1 & \psi & -\theta \\ -\psi & 1 & \emptyset \\ \theta & -\emptyset & 1 \end{pmatrix}$$

Les paramètres de la matrice ROT1 constituent un développement du premier ordre des coordonnées du repère $R_1$ dans le repère R. Cette approximation est satisfaisante puisque $\emptyset$, $\theta$ et $\psi$ sont petits. Cette matrice est indépendante de l'ordre des rotations et elle est unitaire au premier ordre près, donc orthonormée.

ROT2 est définie comme suit :

$$ROT2 = \begin{pmatrix} \cos \omega t & -\sin \omega t & 0 \\ \sin \omega t & \cos \omega t & 0 \\ 0 & 0 & 1 \end{pmatrix}$$

Le système à estimer selon la méthode du filtre de Kalman doit être décrit par un vecteur d'état. Il a été choisi ici le vecteur $X = {}^t(\delta\emptyset, \delta\theta, \delta\psi)$, vecteur des variations angulaires de ligne de visée de la tête optique d'un tour au suivant, défini par le passage sur le même point. L'évolution du système est décrite par un modèle de dynamique, en général de type Gaussien-Markovien représenté sous forme matricielle par l'équation X'= = f(X)+w, où X' est la dérivée du vecteur d'état X par rapport au temps, f(X) une fonction de X et w un bruit excitateur représentant les fluctuations aléatoires de l'état et caractérisé par la matrice de covariance de ce bruit, cette équation est linéarisée et devient X' = F*X+w (1), F*X étant le produit matriciel de la matrice F définie selon le filtre de Kalman et du vecteur d'état X. Cette méthode permet ici de prédire les fonctions de densité de probabilité des angles $\phi$, $\theta$ et $\psi$ et donc de fournir une estimée a priori de ces angles à l'instant t, prenant en compte de façon optimale toutes les mesures passées. Le bruit a une densité de probabilité gaussienne. Plus ce bruit est grand, moins la prédiction est précise.

A partir de l'estimée a priori de ces paramètres, il est possible de prédire la position des points de recalage dans l'image. On recherche les points correspondants dans un voisinage de ces prédictions. L'association des points détectés dans l'image courante avec les points de référence est faite dès que l'on trouve un point non ambigu détecté dans l'image courante et dans le voisinage de recherche. Cette mise en correspondance, qui constitue l'étape 4, fait apparaître un écart entre la position trouvée et la position prédite : cet écart constitue la mesure grâce à laquelle les paramètres angulaires de la ligne de visée de la tête optique peuvent être recalés au cours de l'étape 5.

Chaque point caractéristique de l'image panoramique est repéré par ses coordonnées u et v définies dans le repère $R_{u,v}$ décrit précédemment. L'angle u correspond au numéro de colonne de l'image panoramique directement proportionnel au temps grâce à la relation u = $\omega$t définie précédemment.

Dans la suite ($\delta u$, $\delta v$) représente l'écart entre la position définie dans le repère $R_{u,v}$ par ($u_n$, $v_n$) et obtenue dans l'image en cours et la position ($u_{n-1}$, $v_{n-1}$) obtenue dans l'image précédente pour le même point caractéristique.

$$\delta u = u_n - u_{n-1} \text{ et } \delta v = v_n - v_{n-1}.$$

Soit T, l'écart de temps qui sépare la détection du tour n et celle du tour n-1, T est relié à $\delta u$ par la relation suivante

$$\delta u = \omega T - 2\P,$$

cet angle est supposé petit Soient

$$\delta\varnothing = \varnothing(t+T) - \varnothing(t)$$

$$\delta\theta = \theta(t+T) - \theta(t)$$

$$\delta\psi = \psi(t+T) - \psi(t)$$

où

$\varnothing(t+T)$ est la valeur de l'angle $\varnothing$ au temps t+T

$\varnothing(t)$ est la valeur de l'angle $\varnothing$ au temps t, de même pour $\theta$ et $\psi$.

Les matrices de rotation ROT1 et ROT2 définies précédemment sont orthonormées, donc leurs matrices transposées sont aussi leurs matrices inverses. Les angles $\varnothing$, $\theta$ et $\psi$ étant fonctions du temps, ces matrices sont fonctions du temps. Si ${}^tROT1(t)$ et ${}^tROT2(t)$ sont les matrices transposées des matrices ROT1(t) et ROT2(t) fonctions du temps, il vient :

$$X_2(t+T) = ROT2(t+T)*ROT1(t+T)*{}^tROT1(t)*{}^tROT2(t)*X_2(t) \qquad (2)$$

d'où est déduit la relation suivante

$$(\delta\psi - \delta u)x_2(t+T) = (\sin\omega t.\delta\theta + \cos\omega t.\delta\varnothing)z_2(t+T) \qquad (3)$$

au premier ordre près, ce qui est possible puisque les angles $\varnothing$, $\theta$ et $\psi$ sont petits.

Il a été établi précédemment que $v(t) = z_2(t)/x_2(t)$, en conséquence :

$$\delta u = \delta \psi -v \, (\sin \omega t . \delta \theta + \cos \omega t . \delta \varnothing) \tag{4}$$

de l'équation (3), est également déduit :

$$x_2(t+T)=x_2(t)+(\cos \omega t . \delta \theta -\sin \omega t . \delta \varnothing)z_2(t) \tag{5}$$

$$z_2(t+T)=z_2(t)-(\cos \omega t . \delta \theta -\sin \omega t . \delta \varnothing)x_2(t) \tag{6}$$

enfin des relations (5) et (6) il découle :

$$v(t+T) = \frac{v(t)-(\cos \omega t . \delta \theta -\sin \omega t . \delta \varnothing)}{1 + (\cos \omega t . \delta \theta -\sin \omega t . \delta \varnothing)v(t)} \tag{7}$$

L'équation (4) est linéaire en $\delta \varnothing$, $\delta \theta$ et $\delta \psi$. De plus si le point caractéristique est près de la ligne centrale (v=0), $\delta u = \delta \psi$. Autrement dit, dans ce cas, l'écart en nombre de colonnes est directement proportionnel à l'écart angulaire autour de l'axe vertical. L'équation (7) est homographique en $\delta \varnothing$, $\delta \theta$ et $\delta \psi$ mais peut se linéariser si v est sensiblement nul. Dans ce cas :

$$\delta v =v(t+T)-v(t) = \cos \omega t . \delta \theta -\sin \omega t . \delta \varnothing \tag{8}$$

En réalité, les angles de visée sont petits, les points caractéristiques sont donc tels que v est sensiblement nul, il est donc possible, après linéarisation d'écrire les équations de mesure en utilisant le formalisme du filtre de Kalman :

$$\begin{pmatrix} \dot{\delta u} \\ \delta v \end{pmatrix} = \begin{pmatrix} 1 & -v\sin \omega t & -v\cos \omega t \\ 0 & \cos \omega t & \sin \omega t \end{pmatrix} \cdot \begin{pmatrix} \delta \psi \\ \delta \theta \\ \delta \varnothing \end{pmatrix} + \begin{pmatrix} w_u \\ w_v \end{pmatrix} \tag{9}$$

où $(w_u, w_v)$ représente le bruit de mesure.

Cette relation matricielle suivant le formalisme du filtre de Kalman crée un lien entre le vecteur d'état ($\delta \psi$, $\delta \theta$, $\delta \varnothing$) et la mesure définie par ($\delta u$, $\delta v$). Cette relation sera utilisée lors de l'étape 5 pour définir l'estimation optimale du vecteur d'état à partir de la mesure ($\delta u$, $\delta v$).

Auparavant, dans l'étape 4 de mise en correspondance, en utilisant la relation (9), à partir des valeurs prédites des variations a priori des angles $\varnothing$, $\theta$ et $\psi$, il est possible de prédire la position dans l'image courante des points caractéristiques extraits au tour précédent en appliquant la relation :

$$\begin{pmatrix} \widehat{u_n} \\ \widehat{v_n} \end{pmatrix} = \begin{pmatrix} 1 & -v_{n-1}\sin \omega t & -v_{n-1}\cos \omega t \\ 0 & \cos \omega t & \sin \omega t \end{pmatrix} \begin{pmatrix} \widehat{\delta \psi} \\ \widehat{\delta \theta} \\ \widehat{\delta \varnothing} \end{pmatrix} + \begin{pmatrix} u_{n-1} \\ v_{n-1} \end{pmatrix} \tag{10}$$

le signe ^ indique que les valeurs sont estimées.

$(u_{n-1}, v_{n-1})$ est un vecteur de coordonnées connues, puisque définies au tour précédent.

Le vecteur $(\widehat{u_n}, \widehat{v_n})$ indique la position théorique estimée a priori du point caractéristique que l'on devrait trouver.

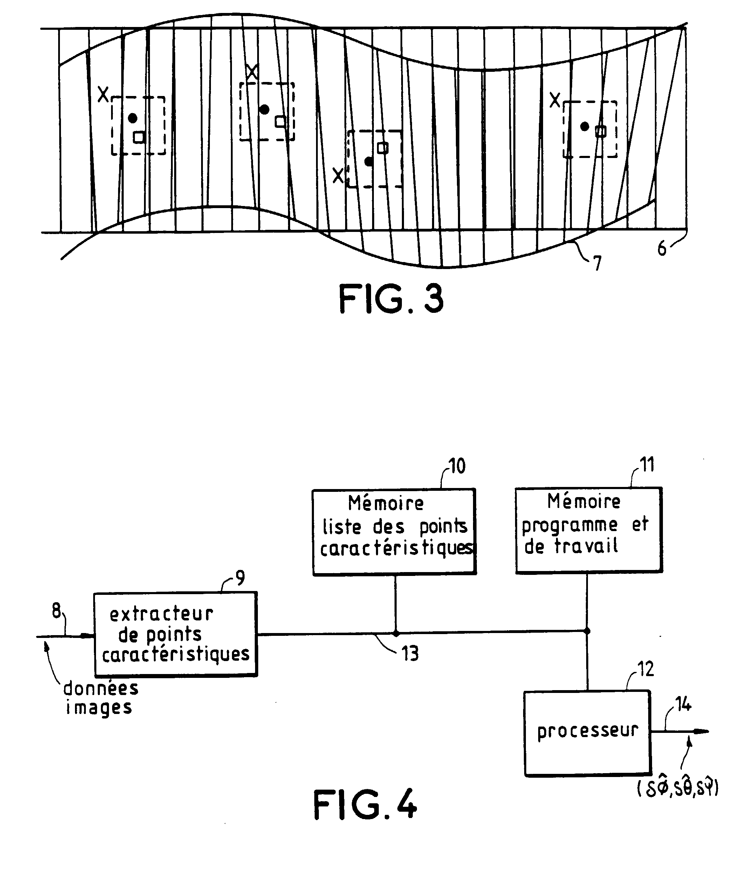

L'étape 4 consiste ensuite à mettre en correspondance les points caractéristiques de l'image en cours avec ceux du tour précédent par une méthode de pistage, c'est-à-dire par la recherche dans la liste des points caractéristiques de l'image courante, des points qui se projettent dans les voisinages des points prédits selon la relation (10) à partir des points caractéristiques de l'image précédente et de l'estimée a priori des paramètres angulaires de visée. La taille des voisinages dépend de l'incertitude de l'estimation. Cette mise en correspondance est illustrée par la figure 3. Sur cette figure apparaissent l'image 6 prise au tour n-1 et l'image déformée 7 prise au tour n superposée à la précédente. Les signes X représentent les points caractéristiques dans l'image au tour n-1, les signes ronds et pleins représentent les points prédits suivant la relation (10) d'après les points caractéristiques du tour n-1 et les angles $\emptyset$, $\theta$ et $\psi$ estimés a priori, les signes carrés représentent les points caractéristiques trouvés dans l'image au tour n associés aux points prédits cités précédemment, enfin les espaces délimités par des traits pointillés représentent les voisinages de recherche autour des points prédits. Dans la pratique le nombre de détections n'est pas trop important, il n'y a donc pas souvent de conflits d'affectations de sorte que l'on peut ignorer les mesures ambiguës.

C'est à partir des points représentés sur la figure 3 par des ronds pleins et des carrés et mis en correspondance ou associés au cours de l'étape 4 que le filtre de Kalman va opérer dans l'étape 5. Cette dernière étape consiste en l'utilisation du filtre de Kalman appliqué à l'estimation des paramètres instantanés de la déformation à partir des mesures des écarts entre les points caractéristiques prédits et ceux obtenus dans l'image courante qui leurs sont associés suivant la mise en correspondance de l'étape 4 de mise en correspondance.

En effet, par application du filtre de Kalman et grâce à l'équation de mesure (9) définie selon ce formalisme, il est possible de déduire des écarts mesurés et définis par les vecteurs ($\delta u$, $\delta v$), l'estimée optimale du vecteur d'état ($\widehat{\delta\emptyset}$, $\widehat{\delta\theta}$, $\widehat{\delta\psi}$), estimée dite à posteriori, ($\delta\emptyset$, $\delta\theta$, $\delta\psi$) représentant la variation des paramètres angulaires de déformation entre deux tours successifs. L'estimation optimale de cette variation permet le recalage continu de l'image en veille panoramique.

Un mode de réalisation possible est représenté par la figure 4. Les données de l'image sont prises en compte par un bus d'entrée 8 relié à un circuit extracteur de points caractéristiques 9, ce dernier peut par exemple être un circuit intégré VLSI, suivant la terminologie anglo-saxonne "very large scale integration". La sortie du circuit 9 est reliée à un bus 13 reliant un processeur 12, une mémoire de programme et de travail 11 contenant notamment les algorithmes de calcul du filtre de Kalman, et une mémoire 10 de type RAM par exemple contenant la liste des points caractéristiques. Le processeur 12 délivre par un bus de sortie 14 les paramètres de déformation estimés, par exemple l'estimation des variations des paramètres angulaires $\widehat{\delta\emptyset}$, $\widehat{\delta\theta}$ et $\widehat{\delta\psi}$ du dispositif de veille.

Plusieurs variantes peuvent être appliquées au procédé selon l'invention. Une première variante consiste à remplacer la méthode de pistage des points caractéristiques utilisée dans l'étape 4 de mise en correspondance par une méthode de corrélation. Dans ce cas, au lieu de mettre en correspondance les listes de points caractéristiques de l'image présente avec celle du tour précédent, il est possible d'effectuer une corrélation d'images : la prédiction de la ligne de visée de la tête optique est utilisée pour prédire la position de l'image. La précision du recalage est augmentée et, surtout, le problème de l'initialisation est simplifié. De plus, le problème de la sélection des points caractéristiques est évité : les points peuvent être prélevés au hasard ou périodiquement. La précision de la corrélation s'exprime par une matrice de covariance de l'erreur de mesure déduite des résultats de corrélation. Cette matrice intervient dans l'équation de recalage du filtre de Kalman.

Une deuxième variante ne prend pas en compte les variations angulaires de la ligne de visée $\delta\emptyset$, $\delta\theta$ et $\delta\psi$, mais cherche à estimer directement les angles de la ligne de visée et les positions angulaires des points caractéristiques. Cela revient à estimer $\emptyset$, $\theta$, $\psi$ et les coordonnées angulaires ($u_i$, $v_i$) des points caractéristiques, i étant compris entre 1 et n, nombre de points caractéristiques.

Ces coordonnées angulaires sont mesurées à chaque tour par les équations de mesure de la forme :

$$u_{im} = \psi - v_i\,(\theta\sin\omega t) + \emptyset\cos\omega t)$$

$$v_{im} = \frac{v_i - (\theta\cos\omega t - \emptyset\sin\omega t)}{1 + (\theta\cos\omega t - \emptyset\sin\omega t)v_i}$$

où ($u_{im}$, $v_{im}$) est la mesure du point caractéristique de rang i.

Dans ce cas $\theta$ et $\emptyset$ ne sont plus nécessairement des petits angles.

Il est possible cependant de linéariser ces équations autour de la prédiction. Le filtrage de Kalman Etendu s'applique alors sur un vecteur d'état à 2n+3 paramètres au lieu de 3 : ($\emptyset$, $\theta$, $\psi$, $u_1$, $v_1$, ... $u_n$, $v_n$). La dynamique des positions des points caractéristiques est plus simple puisqu'il suffit de considérer ces points comme fixes.

Au bout d'un certain nombre de tours, la position estimée du point repéré par ($u_i$, $v_i$) sera précise. Il faut noter cependant que la connaissance des angles absolus $\emptyset$, $\theta$ et $\psi$ n'est pas indispensable pour le recalage, en effet la connaissance des variations d'angles $\emptyset$, $\theta$ et $\psi$ suffit. En revanche, elle améliore le pistage des cibles car elle permet d'utiliser un modèle de dynamique plus précis du fait que l'on dispose d'une estimation précise des angles.

Enfin, une troisième variante permet d'améliorer l'estimation des paramètres de déformation à condition toutefois de tolérer un retard à l'estimation de ces paramètres. En effet, le filtrage de Kalman ne tient compte que des mesures passées. En tenant compte des mesures futures cette estimation peut être améliorée par la technique connue de lissage de Raugh par exemple dont une description peut être trouvée dans l'ouvrage de MM. Labarrere, J.P. Krief et B. Gimonet "Le filtrage et ses applications" " aux éditions Cepadues, Toulouse. Cela revient, en quelque sorte, à interpoler les paramètres instantanées de déformation d'image en s'appuyant sur des points de mesures situés de part et d'autre de cette colonne.

**Revendications**

1. Procédé de recalage continu d'images en veille panoramique utilisant des points caractéristiques extraits de l'image courante (1) et des points caractéristiques prédits à partir de l'image précédente, caractérisé en ce qu'à chaque instant un détecteur linéaire formant une colonne de l'image panoramique, l'image panoramique étant obtenue par la juxtaposition des colonnes d'images formées par ce capteur linéaire en rotation autour d'un axe vertical, il consiste à utiliser un filtre de Kalman pour estimer les paramètres instantanés de déformation de l'image (5) à partir des mesures des écarts entre les points caractéristiques prédits et ceux obtenus dans l'image courante.

2. Procédé selon la revendication 1, caractérisé en ce qu'il consiste à prédire les paramètres instantanés de déformation a priori (3) selon la technique du filtre de Kalman.

3. Procédé selon l'une quelconque des revendications 1 ou 2, caractérisé en ce que les paramètres instantanés de déformation sont trois angles définissant à chaque instant l'orientation du système de détection par rapport à un repère fixe de référence.

4. Procédé selon l'une quelconque des revendications précédentes, caractérisé en ce qu'il met en correspondance par une méthode de pistage (4) les points caractéristiques de l'image en cours avec les points caractéristiques prédits à partir de ceux de l'image précédente et des paramètres de déformation estimés a priori (3).

5. Dispositif pour la mise en oeuvre du procédé selon l'une quelconque des revendications précédentes caractérisé en ce qu'il comporte un détecteur linéaire formant une colonne de l'image panoramique, l'image panoramique étant obtenue par la juxtaposition des colonnes d'images formées par ce capteur linéaire en rotation autour d'un axe vertical, un processeur (12), un extracteur de points caractéristiques (9), une mémoire de programme et de travail (11) contenant des algorithmes de calcul du filtre de Kalman et une mémoire (10) contenant la liste des points caractéristiques, les données de l'image étant prise en compte par un bus d'entrée (8) relié au circuit extracteur (9), la sortie de ce circuit étant reliée par un bus (13) au processeur (12) et aux mémoires (10, 11), le processeur (12) réalisant un filtre de Kalman pour estimer les paramètres instantanés de déformation de l'image à partir des mesures des écarts entre les points prédits et ceux obtenus dans l'image courante.

**Patentansprüche**

1. Verfahren zur kontinuierlichen Nachregelung von Bildern bei der Panoramaüberwachung unter Verwendung von charakteristischen Punkten aus dem laufenden Bild (1) und von charakteristischen Punkten, die aus dem vorhergehenden Bild vorhergesagt wurden, dadurch gekennzeichnet, daß in jedem Augenblick ein linearer Detektor eine Spalte des Panoramabilds erzeugt, daß das Panoramabild durch Aneinanderfügung der von dieser um eine vertikale Achse drehenden linearen Detektorsonde gebildeten Bildspalten erhalten wird und daß das Verfahren darin besteht, ein Kalmanfilter zu verwenden, um die augenblicklichen Parameter der Verformung des Bilds (5) ausgehend von Meßwerten der Abstände zwischen den vorhergesagten charakteristischen Punkten und den im laufenden Bild erhaltenen charakteristischen Punkten abzuschätzen.

2. Verfahren nach Anspruch 1, dadurch gekennzeichnet, daß es darin besteht, die augenblicklichen Parameter der Verformung vorab gemäß der Kalmanfiltertechnik vorauszusagen (3).

3. Verfahren nach einem beliebigen der Ansprüche 1 oder 2, dadurch gekennzeichnet, daß die augenblicklichen Verformungsparameter drei Winkel sind, die in jedem Augenblick die Orientierung des Detektorsystems bezüglich eines ortsfesten Bezugskoordinatensystems definieren.

4. Verfahren nach einem beliebigen der vorhergehenden Ansprüche, dadurch gekennzeichnet, daß durch eine Verfolgungsmethode (4) die charakteristischen Punkte des laufenden Bilds mit den ausgehend von den charakteristischen Punkten des vorhergehenden Bilds und den vorab geschätzten Verformungsparametern vorhergesagten charakteristischen Punkten in Korrespondenz gebracht werden.

5. Vorrichtung zur Durchführung des Verfahrens nach einem beliebigen der vorhergehenden Ansprüche, dadurch gekennzeichnet, daß es einen linearen Detektor enthält, der eine Spalte des Panoramabilds erzeugt, wobei das Panoramabild durch Aneinanderfügung der von dieser um eine senkrechte Achse drehenden linearen Detektorsonde gebildeten Bildspalten erhalten wird, und daß weiter ein Prozessor (12), ein Extraktor für charakteristische Punkte (9), ein Programm- und Arbeitsspeicher (11) mit den Rechenalgorithmen des Kalmanfilters und ein Speicher (10) vorgesehen sind, der die Liste der charakteristischen Punkte enthält, wobei die Daten des Bilds von einem an den Extraktor (9) angeschlossenen Eingangsbus (8) übernommen werden und der Ausgang des Extraktors über einen Bus (13) an den Prozessor (12) und die Speicher (10, 11) angeschlossen ist, und daß der Prozessor (12) ein Kalmanfilter realisiert, um die augenblicklichen Parameter der Verformung des Bildes ausgehend von Meßwerten der Abweichungen zwischen den vorhergesagten Punkten und den im laufenden Bild erhaltenen Punkten abzuschätzen.

## Claims

1. Method for the continuous readjustment of panoramic surveillance images using characteristic points extracted from the current image (1) and characteristic points predicted on the basis of the previous image, characterized in that at each instant a linear detector forming a column of the panoramic image, the panoramic image being obtained by juxtaposing the image columns formed by this linear sensor under rotation about a vertical axis, it consists in using a Kalman filter to estimate the instantaneous deformation parameters of the image (5) from measurements of the offsets between the predicted characteristic points and those obtained in the current image.

2. Method according to Claim 1, characterized in that it consists in predicting the a priori instantaneous deformation parameters (3) according to the Kalman filter technique.

3. Method according to either of Claims 1 or 2, characterized in that the instantaneous deformation parameters are three angles defining at each instant the orientation of the detection system with respect to a fixed reference frame.

4. Method according to any one of the preceding claims, characterized in that by a tracking method (4) it matches up the characteristic points of the current image with the characteristic points predicted from those of the previous image and from the a priori estimated deformation parameters (3).

5. Device for implementing the method according to any one of the preceding claims, characterized in that it includes a linear detector forming a column of the panoramic image, the panoramic image being obtained by juxtaposing the image columns formed by this linear sensor under rotation about a vertical axis, a processor (12), a characteristic points extractor (9), a program and work memory (11) containing algorithms for computing the Kalman filter and a memory (10) containing the list of the characteristic points, the data of the image being taken into account by an input bus (8) connected to the extractor circuit (9), the output of this circuit being connected by a bus (13) to the processor (12) and to the memories (10, 11), the processor (12) constructing a Kalman filter to estimate the instantaneous deformation parameters of the image on the basis of the measurements of the offsets between the predicted points and those obtained in the current image.

# FIG.1

| Extraction des points caractéristiques | 1 |

| Gestion de la liste des points caractéristiques | 2 |

| Prédiction à priori des paramètres de déformation | 3 |

| Mise en correspondance | 4 |

| Recalage par estimation optimale à postériori des paramètres de déformation | 5 |

FIG.2a

FIG.2b

# FIG. 3

# FIG.4